# EUROPEAN PATENT APPLICATION

(11) **EP 4 523 826 A1**
(43) Date of publication of application: **19.03.2025**
(21) Application number: 22947995.1
(22) Date of filing: 23.06.2022
(51) Int. Cl.: B23H 1/10

(54) **ELECTRICAL DISCHARGE MACHINE**

(71) Applicant: FANUC CORPORATION, Oshino-mura Minamitsuru-gun Yamanashi 401-0597 (JP)
(72) Inventor: KASAI, Hirotsugu, Minamitsuru-gun, Yamanashi 401-0597 (JP); MAKINO, Yoshinori, Minamitsuru-gun, Yamanashi 401-0597 (JP)
(74) Representative: Keil & Schaafhausen Patentanwälte PartGmbB
(86) International application number: PCT/JP2022/025144
(87) International publication number: WO 2023/248434

(57) **Abstract**

An electrical discharge machine (10) comprises a dirty water tank (14), a fresh water tank (16), a first pipeline (20), and a sludge filter (26). The sludge filter (26) is a porous material having pores through which fresh water passes, the fresh water being pumped up from the fresh water tank (16) and supplied from the first pipeline (20), which guides the fresh water. Machining waste is captured in the pores of the porous material.

## Description

### TECHNICAL FIELD

The present invention relates to an electrical discharge machine.

### BACKGROUND ART

The electrical discharge machine machines a workpiece disposed in a dielectric working fluid by electrical discharge. By this machining, the metal of the workpiece or the like is formed as ions in the dielectric working fluid. In general, an ion exchange resin is used to reduce the metal ion concentration in the dielectric working fluid.

JP 2013-132735 A discloses maintaining the resistivity of a dielectric working fluid at a value higher than a predetermined value by using an ion exchange resin to reduce the ion concentration in the dielectric working fluid.

### SUMMARY OF THE INVENTION

However, the ion exchange resin has a life, and the ion exchange resin needs to be replaced after about 300 hours. If the ion exchange resin is not replaced, the machine accuracy becomes unstable, and therefore, the running cost for maintaining the machine accuracy tends to increase. Therefore, efficiently improving the resistivity of the dielectric working fluid has been a problem.

The present invention has the object of solving the aforementioned problem.

According to an aspect of the present invention, there is provided an electrical discharge machine for machining a workpiece disposed in a dielectric working fluid by electrical discharge, the electrical discharge machine comprising: a wastewater tank configured to store wastewater which is the dielectric working fluid containing machining chips generated by machining of the workpiece; a clean water tank configured to store clean water which is the dielectric working fluid obtained by removing the machining chips from the wastewater; a first conduit configured to guide the clean water pumped up from the clean water tank; and a sludge filter which is a porous body including pores through which the clean water supplied from the first conduit passes, the machining chips being trapped in the pores.

According to the above aspect, the clean water from which the machining chips have been removed is intentionally caused to pass through the pores in which the machining chips have been trapped, whereby the resistivity of the clean water can be increased. Therefore, the resistivity of the clean water can be improved without using a generally used ion exchange resin. As a result, the resistivity of the dielectric working fluid can be efficiently improved.

The reciprocal of the resistivity [Ωm] is the conductivity [S/m], and there is a correlation between the resistivity [Ωm] and the conductivity [S/m]. Therefore, the resistivity [Ωm] can be replaced with the conductivity [S/m]. When the resistivity [Ωm] is replaced with the conductivity [S/m], the magnitude relationship of the values is reversed. For example, "increasing the resistivity [Ωm]" is synonymous with "decreasing the conductivity [S/m]".

### BRIEF DESCRIPTION OF DRAWINGS

[FIG. 1] FIG. 1 is a schematic view showing a configuration of an electrical discharge machine according to an embodiment;
[FIG. 2] FIG. 2 is a schematic view showing a configuration of the electrical discharge machine according to a first modification;
[FIG. 3] FIG. 3 is a schematic view showing a configuration of the electrical discharge machine according to a second modification; and
[FIG. 4] FIG. 4 is a schematic view showing a configuration of the electrical discharge machine according to a third modification.

### DETAILED DESCRIPTION OF THE INVENTION

### [Embodiment]

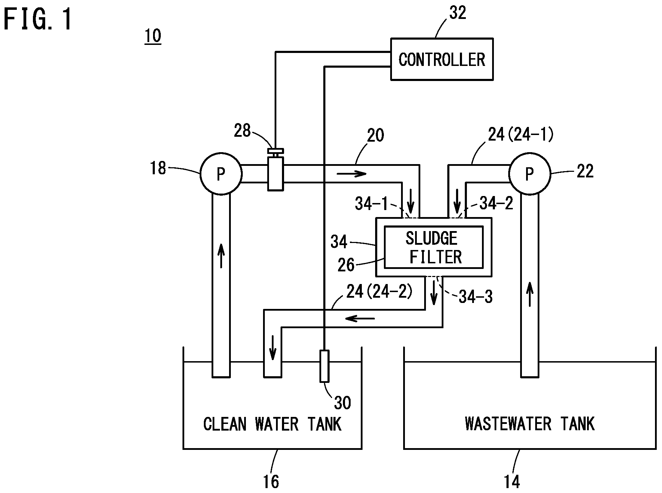

FIG. 1 is a schematic view showing a configuration of an electrical discharge machine 10 according to an embodiment. The electrical discharge machine 10 machines a workpiece disposed in a dielectric working fluid by electrical discharge. The electrical discharge machine 10 may be a wire electrical discharge machine or a die-sinking electrical discharge machine. The wire electrical discharge machine generates electrical discharge at a machining gap formed between a wire electrode and a workpiece. The die-sinking electrical discharge machine generates an electrical discharge at a machining gap formed between a die-sinking electrode and a workpiece.

The dielectric working fluid is a liquid used for machining the workpiece. The dielectric working fluid may be water. The workpiece is a metal such as an iron-based material or a tungsten carbide material, an aluminum-based material, a copper alloy-based material, a nickel-based material, or a titanium-based material. The electrode (the wire electrode or the die-sinking electrode) of the electrical discharge machine 10 is a metal such as a tungsten-based metal, a copper alloy-based metal, a brass-based metal, a titanium-based metal, a zinc-coated brass-based metal, or an iron-based metal, a molybdenum-based metal, or a carbon-based metal used as a core material of a brass-based metal. It should be noted that a case where the carbon-based metal is used is limited to a case where the electrical discharge machine 10 is a die-sinking electrical discharge machine.

The electrical discharge machine 10 includes a wastewater tank 14, a clean water tank 16, a first pump 18, a first conduit 20, a second pump 22, a second conduit 24, a sludge filter 26, an on-off valve 28, a resistivity meter 30, and a controller 32.

The wastewater tank 14 is a tank for storing wastewater. The wastewater is a dielectric working fluid containing machining chips generated by machining of the workpiece. The clean water tank 16 is a tank for storing clean water. The clean water is a dielectric working fluid obtained by removing machining chips from the wastewater. The machining chips contain at least one of iron, aluminum, copper, zinc, tungsten carbide, tungsten, molybdenum, carbon, titanium, silicon, manganese, chromium, phosphorus, sulfur, and nickel.

The first pump 18 pumps up clean water from the clean water tank 16 and applies a flow force to the clean water. The first pump 18 is provided in the first conduit 20. The first conduit 20 guides the clean water pumped up from the clean water tank 16. In the present embodiment, the first conduit 20 guides the clean water to the sludge filter 26.

The second pump 22 pumps up the wastewater from the wastewater tank 14 and applies a flow force to the wastewater. The second pump 22 is provided in the second conduit 24. In the present embodiment, the second pump 22 is provided in the second conduit 24 between the wastewater tank 14 and the sludge filter 26. The second conduit 24 guides the dielectric working fluid from the wastewater tank 14 to the clean water tank 16. The second conduit 24 includes an upstream portion 24-1 and a downstream portion 24-2. The upstream portion 24-1 guides the wastewater pumped up from the wastewater tank 14 to the sludge filter 26. The downstream portion 24-2 guides the clean water flowing out from the sludge filter 26 to the clean water tank 16.

The sludge filter 26 is a porous body including pores. Machining chips generated by machining of the workpiece are trapped in the pores. The sludge filter 26 may be a porous body that has been used in the past to remove machining chips. Examples of the porous body include filter paper and filter cloth. The sludge filter 26 is accommodated in a filter container 34. The sludge filter 26 accommodated in the filter container 34 may be joined to the filter container 34.

The filter container 34 includes a first fluid inlet 34-1, a second fluid inlet 34-2 and a fluid outlet 34-3. The first fluid inlet 34-1, the second fluid inlet 34-2, and the fluid outlet 34-3 communicate with a filter accommodation space inside the filter container 34. The filter accommodation space is a space in which the sludge filter 26 is accommodated.

The first fluid inlet 34-1 and the second fluid inlet 34-2 are arranged, for example, in the upper wall of the filter container 34. The first fluid inlet 34-1 and the second fluid inlet 34-2 may be arranged in the side wall of the filter container 34. The fluid outlet 34-3 is arranged, for example, in the lower wall of the filter container 34. The fluid outlet 34-3 may be arranged in the side wall of the filter container 34. The first fluid inlet 34-1 is connected to an end portion (a downstream end portion) of the first conduit 20. The second fluid inlet 34-2 is connected to an end portion (a downstream end portion) of the upstream portion 24-1 of the second conduit 24. The fluid outlet 34-3 is connected to an end portion (an upstream end portion) of the downstream portion 24-2 of the second conduit 24. In a case where the dielectric working fluid is allowed to flow from the fluid outlet 34-3 to the clean water tank 16 by free fall, the downstream portion 24-2 of the second conduit 24 may be removed.

Either wastewater or clean water is selectively supplied to the sludge filter 26. The wastewater is supplied from the wastewater tank 14 through the second conduit 24 and the second fluid inlet 34-2 in this order. The clean water is supplied from the clean water tank 16 through the first conduit 20 and the first fluid inlet 34-1 in this order.

In a case where the wastewater is supplied to the sludge filter 26, the sludge filter 26 removes the machining chips contained in the wastewater. In this case, the machining chips are trapped in the pores of the sludge filter 26. The dielectric working fluid (the clean water) from which the machining chips have been removed by the sludge filter 26 is supplied from the fluid outlet 34-3 to the clean water tank 16.

On the other hand, in a case where the clean water is supplied to the sludge filter 26, the sludge filter 26 makes the resistivity of the clean water larger than the resistivity of clean water stored in the clean water tank 16. In this case, the sludge filter 26 increases the resistivity of the clean water by causing the clean water to pass through the pores in which the machining chips are trapped.

The on-off valve 28 is provided in the first conduit 20. The on-off valve 28 is configured to be able to switch between opening and closing the first conduit 20. When the on-off valve 28 is opened, the first conduit 20 is opened. When the on-off valve 28 is closed, the first conduit 20 is closed. The opening and closing of the on-off valve 28 are executed by the controller 32.

The resistivity meter 30 is provided in the clean water tank 16. The resistivity meter 30 measures the resistivity of the clean water stored in the clean water tank 16 and outputs a signal indicating the resistivity to the controller 32.

The controller 32 controls the first pump 18, the second pump 22, and the on-off valve 28. The controller 32 includes a processor such as a CPU or an MPU, and one or a plurality of memories such as a ROM, a RAM, and a hard disk. The controller 32 may be a numerical controller of the electrical discharge machine 10. The controller 32 may be another controller provided separately from the numerical controller of the electrical discharge machine 10. The other controller includes a processor different from the processor included in the numerical controller.

A filtration start command or a filtration end command is given to the controller 32. The filtration start command and the filtration end command are given, for example, from an input device connected to the controller 32 in response to an operation of a user. The input device may be a touch panel, a keyboard, a mouse, or an operation panel.

Upon receiving the filtration start command, the controller 32 drives the second pump 22 to supply the wastewater stored in the wastewater tank 14 to the sludge filter 26. In this case, the controller 32 does not drive the first pump 18. Further, the controller 32 closes the on-off valve 28 to prevent the wastewater from flowing to the clean water tank 16.

Upon receiving the filtration end command, the controller 32 stops the second pump 22 to stop the supply of the wastewater to the sludge filter 26. In this case, the controller 32 compares the resistivity measured by the resistivity meter 30 with a predetermined threshold.

In a case where the resistivity is equal to or less than the predetermined threshold, the controller 32 supplies the clean water stored in the clean water tank 16 to the sludge filter 26. In this case, the controller 32 drives the first pump 18 and opens the on-off valve 28 to cause the clean water to pass through the pores of the sludge filter 26 in which the machining chips are trapped. Consequently, the resistivity of the clean water becomes larger than the resistivity of clean water stored in the clean water tank 16. On the other hand, in a case where the resistivity exceeds the predetermined threshold, the controller 32 stops the first pump 18 and closes the on-off valve 28.

The present inventors have found that, when clean water is caused to pass through the pores of a porous body in which machining chips are trapped, the resistivity of the clean water increases. In the present embodiment, the sludge filter 26 is provided. The sludge filter 26 is a porous body including pores through which clean water supplied from the first conduit 20 passes. Machining chips generated by machining of the workpiece are trapped in the pores. Consequently, by intentionally causing the clean water from which the machining chips have been removed to pass through the pores in which the machining chips are trapped, the resistivity of the clean water can be increased. Therefore, the resistivity of the clean water can be improved without using a generally used ion exchange resin. As a result, the resistivity of the dielectric working fluid can be efficiently improved.

Furthermore, in the present embodiment, the sludge filter 26 is provided in the second conduit 24 that guides the dielectric working fluid from the wastewater tank 14 to the clean water tank 16, and the first conduit 20 guides the clean water to the sludge filter 26. Thus, the sludge filter 26 for increasing the resistivity of the clean water can be used also as a filtration filter. As a result, the resistivity of the dielectric working fluid can be efficiently improved.

### [Modifications]

The above embodiment may be modified as follows.

### (Modification 1)

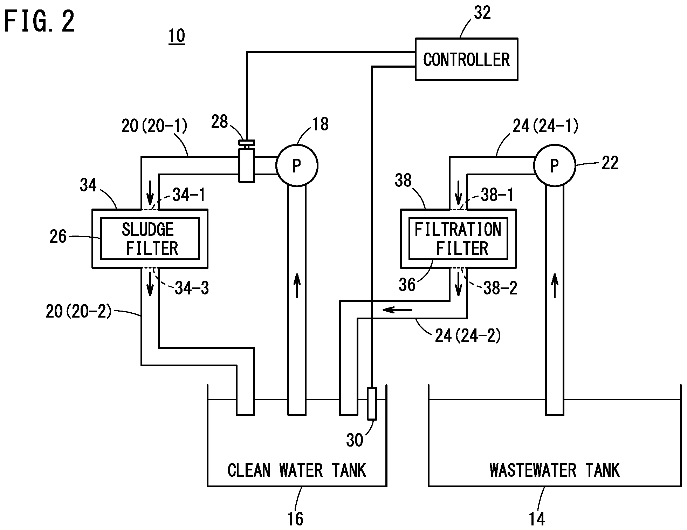

FIG. 2 is a schematic view showing a configuration of the electrical discharge machine 10 according to a first modification. In FIG. 2, the same components as those described in the embodiment are denoted by the same reference numerals. It should be noted that, in the present modification, descriptions that are duplicative of those given in the embodiment will be omitted.

In the present modification, a filtration filter 36 is newly provided separately from the sludge filter 26. The filtration filter 36 is accommodated in a filter container 38. The filter container 38 includes a fluid inlet 38-1 and a fluid outlet 38-2. The end portion (the downstream end portion) of the upstream portion 24-1 of the second conduit 24 is connected to the fluid inlet 38-1. The end portion (the upstream end portion) of the downstream portion 24-2 of the second conduit 24 is connected to the fluid outlet 38-2.

The filtration filter 36 is a porous body including pores. The filtration filter 36 removes machining chips contained in the wastewater. In a case where the filtration filter 36 is used even once (in a case the wastewater passes through the filtration filter 36 even once), the machining chips are trapped in the pores of the filtration filter 36. When replaced with an unused filtration filter 36, the used filtration filter 36 is taken out from the filter container 38. In this case, the used filtration filter 36 may be used as the sludge filter 26.

In the case of the present modification, the first conduit 20 is formed so that the clean water flows to the clean water tank 16 through the sludge filter 26. Specifically, the first conduit 20 is divided into an upstream portion 20-1 and a downstream portion 20-2. An end portion (a downstream end portion) of the upstream portion 20-1 is connected to the first fluid inlet 34-1 of the filter container 34. The upstream portion 20-1 guides the clean water pumped up from the clean water tank 16 to the sludge filter 26. An end portion (an upstream end portion) of the downstream portion 20-2 is connected to the fluid outlet 34-3 of the filter container 34. The downstream portion 20-2 guides the clean water flowing out from the sludge filter 26 to the clean water tank 16.

In addition, in the case of the present modification, the controller 32 compares the resistivity measured by the resistivity meter 30 with the predetermined threshold regardless of whether or not wastewater is supplied to the filtration filter 36. When the resistivity becomes equal to or less than the predetermined threshold, the controller 32 continues to supply the clean water to the sludge filter 26 until the resistivity exceeds the threshold.

According to the present modification, even while the filtration filter 36 is filtering the wastewater, the clean water stored in the clean water tank 16 can be caused to pass through the pores of the sludge filter 26 to improve the resistivity of the clean water.

### (Modification 2)

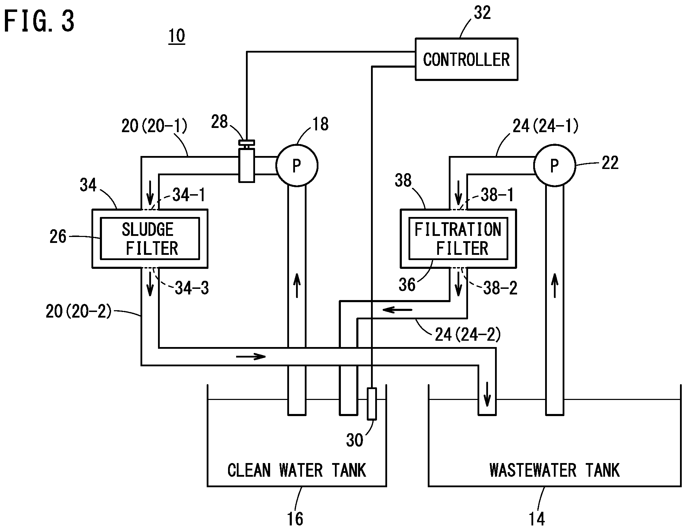

FIG. 3 is a schematic view showing a configuration of the electrical discharge machine 10 according to a second modification. In FIG. 3, the same components as those described in the embodiment and the first modification are denoted by the same reference numerals. It should be noted that, in the present modification, descriptions that are duplicative of those given in the embodiment will be omitted.

In the present modification, only the first conduit 20 is different from that of the first modification. In the first modification, the first conduit 20 is formed so that the clean water flows to the clean water tank 16 through the sludge filter 26. On the other hand, in the present modification, the first conduit 20 is formed so that the clean water flows to the wastewater tank 14 through the sludge filter 26. Specifically, in the case of the present modification, the downstream portion 20-2 of the first conduit 20 guides the clean water flowing out from the sludge filter 26 to the wastewater tank 14.

In the present modification as well, the resistivity of the clean water can be improved as in the first modification.

### (Modification 3)

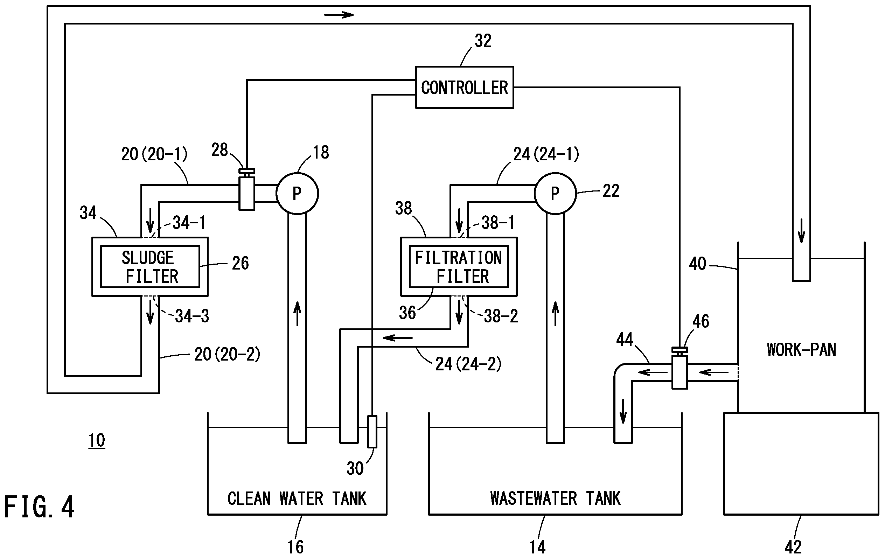

FIG. 4 is a schematic view showing a configuration of the electrical discharge machine 10 according to a third modification. In FIG. 4, the same components as those described in the embodiment and the first modification are denoted by the same reference numerals. It should be noted that, in the present modification, descriptions that are duplicative of those given in the embodiment will be omitted.

In the present modification, a work-pan 40 is newly provided. The work-pan 40 is a tank that stores a dielectric working fluid for immersing a workpiece. The work-pan 40 is installed on the upper surface of an installation base 42. In the case of the present modification, the first conduit 20 is formed so that the clean water flows to the work-pan 40 through the sludge filter 26. Specifically, the downstream portion 20-2 of the first conduit 20 guides the clean water flowing out from the sludge filter 26 to the work-pan 40. In the present modification as well, the resistivity of the clean water can be improved as in the first modification.

In addition, in the present modification, a third conduit 44 is connected to the work-pan 40. The third conduit 44 guides the dielectric working fluid stored in the work-pan 40 to the wastewater tank 14. An on-off valve 46 is provided in the third conduit 44. The on-off valve 46 is configured to be able to switch between opening and closing the third conduit 44. When the on-off valve 46 is opened, the third conduit 44 is opened. When the on-off valve 46 is closed, the third conduit 44 is closed. The opening and closing of the on-off valve 46 are executed by the controller 32.

The controller 32 opens the on-off valve 46 at a predetermined timing such as when the machining of the workpiece is finished, and discharges the dielectric working fluid stored in the work-pan 40 to the wastewater tank 14. In this case, the controller 32 may open the on-off valve 28 and drive the first pump 18 to supply, to the work-pan 40, the clean water in an amount corresponding to the amount of the dielectric working fluid discharged to the wastewater tank 14. This can suppress a significant increase in the ion concentration of the dielectric working fluid stored in the work-pan 40, and as a result, can suppress a decrease in the machine accuracy.

### (Modification 4)

The resistivity meter 30 may be replaced by a conductivity meter. The conductivity meter measures the conductivity of the clean water stored in the clean water tank 16 and outputs a signal indicating the conductivity to the controller 32. In the present modification, the controller 32 compares the conductivity measured by the conductivity meter with a predetermined threshold. Further, in the present modification, in a case where the conductivity is equal to or higher than the predetermined threshold, the controller 32 drives the first pump 18 and opens the on-off valve 28. The present modification is not limited to being applied to the embodiment, and can be applied to any of the first to third modifications.

### (Modification 5)

The controller 32 may control an inverter that drives the first pump 18 to adjust the flow rate of the clean water in the first conduit 20. In this case, the on-off valve 28 may be removed. In addition, in a case where the on-off valve 28 is a solenoid valve whose opening degree can be adjusted, the controller 32 may adjust the flow rate of the clean water in the first conduit 20 by controlling the opening degree of the on-off valve 28. The present modification is not limited to being applied to the embodiment, and can be applied to any of the first to third modifications.

### (Modification 6)

The sludge filter 26 may be provided in the clean water tank 16. The present modification is not limited to being applied to the embodiment, and can be applied to any of the first to third modifications.

### [Invention]

The invention and effects that can be grasped from the above description will be described below.

(1) The present invention is characterized by the electrical discharge machine (10) for machining the workpiece disposed in the dielectric working fluid by electrical discharge, the electrical discharge machine including: the wastewater tank (14) configured to store wastewater which is the dielectric working fluid containing machining chips generated by machining of the workpiece; the clean water tank (16) configured to store clean water which is the dielectric working fluid obtained by removing the machining chips from the wastewater; the first conduit (20) configured to guide the clean water pumped up from the clean water tank; and the sludge filter (26) which is a porous body including pores through which the clean water supplied from the first conduit passes, the machining chips being trapped in the pores.
   According to this feature, the clean water from which the machining chips have been removed is intentionally caused to pass through the pores in which the machining chips are trapped, whereby the resistivity of the clean water can be increased. Therefore, the resistivity of the clean water can be improved without using a generally used ion exchange resin. As a result, the resistivity of the dielectric working fluid can be efficiently improved.
(2) The electrical discharge machine according to the present invention may further include the second conduit (24) configured to guide the dielectric working fluid from the wastewater tank to the clean water tank, and the filtration filter (36) provided in the second conduit and configured to remove the machining chips from the wastewater, wherein the sludge filter may be separate from the filtration filter. According to this feature, the resistivity of the clean water can be improved while removing the machining chips from the wastewater.
(3) In the electrical discharge machine according to the present invention, the first conduit may be formed in a manner so that the clean water flows through the sludge filter to the clean water tank. According to this feature, the resistivity of the clean water stored in the clean water tank can be stabilized.
(4) In the electrical discharge machine according to the present invention, the first conduit may be formed in a manner so that the clean water flows through the sludge filter to the wastewater tank. According to this feature, the resistivity of the wastewater stored in the wastewater tank can be stabilized.
(5) In the electrical discharge machine according to the present invention, the first conduit may be formed in a manner so that the clean water flows through the sludge filter to the work-pan (40) configured to store the dielectric working fluid for immersing the workpiece. According to this feature, the resistivity of the dielectric working fluid stored in the work-pan can be stabilized. As a result, it is possible to suppress a decrease in machine accuracy due to a significant increase in the ion concentration of the dielectric working fluid.
(6) The electrical discharge machine according to the present invention may further include the second conduit configured to guide the dielectric working fluid from the wastewater tank to the clean water tank, wherein the sludge filter may be provided in the second conduit, and the first conduit may guide the clean water to the sludge filter. According to this feature, the sludge filter for increasing the resistivity of the clean water can be used also as a filtration filter. As a result, the resistivity of the dielectric working fluid can be efficiently improved.
(7) In the electrical discharge machine according to the present invention, the sludge filter may be the porous body that has been used for removing the machining chips. According to this feature, the filtration filter can be recycled as the sludge filter.
(8) In the electrical discharge machine according to the present invention, the machining chips may contain at least one of iron, aluminum, copper, zinc, tungsten carbide, tungsten, molybdenum, carbon, titanium, silicon, manganese, chromium, phosphorus, sulfur, and nickel. According to this feature, the resistivity of the clean water can be appropriately increased.
(9) The electrical discharge machine according to the present invention may further include the resistivity meter (30) configured to measure a resistivity of the clean water, the pump (18) configured to pump up the clean water from the clean water tank, and the controller (32) configured to control the pump to cause the pump to pump up the clean water in a case where the resistivity is equal to or less than a predetermined threshold. According to this feature, an increase in the ion concentration of the clean water can be reliably suppressed.

The present invention is not limited to the above disclosure, and various modifications are possible without departing from the essence and gist of the present invention.

### REFERENCE SIGNS LIST

- 10:: electrical discharge machine
- 14:: wastewater tank
- 16:: clean water tank
- 18:: first pump
- 20:: first conduit
- 22:: second pump
- 24:: second conduit
- 26:: sludge filter
- 28, 46:: on-off valve
- 30:: resistivity meter
- 32:: controller
- 34, 38:: filter container
- 36:: filtration filter
- 40:: work-pan

## Claims

1. An electrical discharge machine (10) for machining a workpiece disposed in a dielectric working fluid by electrical discharge, the electrical discharge machine comprising:
a wastewater tank (14) configured to store wastewater which is the dielectric working fluid containing machining chips generated by machining of the workpiece;
a clean water tank (16) configured to store clean water which is the dielectric working fluid obtained by removing the machining chips from the wastewater;
a first conduit (20) configured to guide the clean water pumped up from the clean water tank; and
a sludge filter (26) which is a porous body including pores through which the clean water supplied from the first conduit passes, the machining chips being trapped in the pores.

2. The electrical discharge machine according to claim 1, further comprising:
a second conduit (24) configured to guide the dielectric working fluid from the wastewater tank to the clean water tank; and
a filtration filter (36) provided in the second conduit and configured to remove the machining chips from the wastewater, wherein
the sludge filter is separate from the filtration filter.

3. The electrical discharge machine according to claim 2, wherein
the first conduit is formed in a manner so that the clean water flows through the sludge filter to the clean water tank.

4. The electrical discharge machine according to claim 2, wherein
the first conduit is formed in a manner so that the clean water flows through the sludge filter to the wastewater tank.

5. The electrical discharge machine according to claim 2, wherein
the first conduit is formed in a manner so that the clean water flows through the sludge filter to a work-pan (40) configured to store the dielectric working fluid for immersing the workpiece.

6. The electrical discharge machine according to claim 1, further comprising a second conduit configured to guide the dielectric working fluid from the wastewater tank to the clean water tank, wherein
the sludge filter is provided in the second conduit, and
the first conduit guides the clean water to the sludge filter.

7. The electrical discharge machine according to any one of claims 2 to 6, wherein
the sludge filter is the porous body that has been used for removing the machining chips.

8. The electrical discharge machine according to any one of claims 1 to 7, wherein
the machining chips contain at least one of iron, aluminum, copper, zinc, tungsten carbide, tungsten, molybdenum, carbon, titanium, silicon, manganese, chromium, phosphorus, sulfur, and nickel.

9. The electrical discharge machine according to any one of claims 1 to 8, further comprising:
a resistivity meter (30) configured to measure a resistivity of the clean water;
a pump (18) configured to pump up the clean water from the clean water tank; and
a controller (32) configured to control the pump to cause the pump to pump up the clean water in a case where the resistivity is equal to or less than a predetermined threshold.
